Europäisches Patentamt

European Patent Office

Office européen des brevets

(19)

(11) EP 1 617 429 A1

(12) EUROPEAN PATENT APPLICATION
published in accordance with Art. 158(3) EPC

(43) Date of publication:
18.01.2006 Bulletin 2006/03

(51) Int Cl.:
*G11B 7/26* (1968.09)

(21) Application number: 04728017.7

(22) Date of filing: 16.04.2004

(86) International application number:
PCT/JP2004/005486

(87) International publication number:
WO 2004/093071 (28.10.2004 Gazette 2004/44)

(84) Designated Contracting States:
AT BE BG CH CY CZ DE DK EE ES FI FR GB GR
HU IE IT LI LU MC NL PL PT RO SE SI SK TR
Designated Extension States:
AL HR LT LV MK

(30) Priority: 18.04.2003 JP 2003114688

(71) Applicant: Lintec Corporation
Tokyo 173-0001 (JP)
(72) Inventors:
• KATOH, Kazuya,
c/o Lintec Corporation
Warabi-shi,
Saitama 3350005 (JP)
• KUBOTA, Shin,
c/o Lintec Corporation
Warabi-shi,
Saitama 3350005 (JP)
• MIYATA, Sou,
c/o Lintec Corporation
Warabi-shi,
Saitama 3350005 (JP)

(74) Representative: Cresswell, Thomas Anthony
J.A. KEMP & CO.
14 South Square
Gray's Inn
London WC1R 5JJ (GB)

(54) **SHEET FOR MANUFACTURING OPTICAL DISK AND OPTICAL DISK**

(57) Optical disc manufacturing sheet 1 comprising protective sheet 12 and curable adhesive layer 11 with a pre-curing storage elastic modulus of $10^3$ to $10^6$ Pa and a post-curing storage elastic modulus of $10^7$ to $10^{11}$ Pa is laminated on reflective layer 3 formed on optical disc substrate 2. In the optical disc D1 obtained in this way, adhesive layer 11 has a uniform thickness and protective sheet 12 is resistant to pressure imprint.

Fig. 2

EP 1 617 429 A1

**Description**

TECHNICAL FIELD

The present invention relates to an optical disc manufacturing sheet and optical disc, and more particularly to an optical disc manufacturing sheet and optical disc which are resistant to pressure imprint.

BACKGROUND ART

To protect the recording layer of optical discs, ultraviolet-curable resins are often applied by spin coating or the like to the recording layer surfaces and cured to form an optically transparent protective layer. However, with such methods it is difficult to form a protective layer of a uniform thickness, and the resulting discs are liable to data reproduction and recording errors particularly if they are large-capacity optical discs.

A method has therefore been proposed wherein an ultraviolet-curable liquid adhesive is applied by spin coating or the like to the recording layer surface, an optically transparent cover film is laminated to the resulting adhesive layer, and the ultraviolet-curable adhesive is then cured. However, even in this method the application method produces thickness irregularities in the adhesive layer, which may not have the uniform thickness required by the product.

By contrast, a method has been proposed in which a cover film is laminated to the recording layer surface using a pressure sensitive adhesive sheet with the thickness of the pressure sensitive adhesive layer controlled in advance. (Patent No. 3338660, Japanese Patent Application Laid-open No. 2000-67468). With this pressure sensitive adhesive sheet the thickness specifications required for the product can be maintained if a pressure sensitive adhesive layer with a uniform thickness can be formed at the pressure sensitive adhesive sheet manufacturing stage.

However, the problem is that because conventionally used pressure sensitive adhesives have low elastic modulus in the room temperature range, when pressure is applied to part of the cover film the cover film is deformed together with the pressure sensitive adhesive layer. For example, if an optical disc is pinched with a clip or a book or other weighty object is placed and left on the optical disc when there are protrusions on the cover film side, the pressure sensitive adhesive layer and cover film are deformed and the cover film is imprinted by pressure.

Such pressure imprint on a cover film is a serious problem, interfering with data recording and reproduction especially in the case of Blu-ray Discs, which use high numerical aperture (0.85) lenses and short wavelength (405 nm) lasers to increase recording densities. Although current Blu-ray Discs are enclosed in cartridges, it is likely that they will be made bare in the future, at which time the problems mentioned above would be noticed.

DISCLOSURE OF THE INVENTION

In light of these circumstances, it is an object of the present invention to provide an optical disc manufacturing sheet and optical disc which have uniform thickness of the adhesive layer and which are resistant to pressure imprint on the protective layer.

To achieve this object, the present invention first provides an optical disc manufacturing sheet for adhering a protective layer to the recording layer of an optical disc, wherein the optical disc manufacturing sheet comprises a curable adhesive layer the pre-curing storage elastic modulus of which is $10^3$ to $10^6$ Pa, and the post-curing storage elastic modulus of which is $10^7$ to $10^{11}$ Pa (Invention 1).

If the pre-curing storage elastic modulus of the adhesive layer is in such a range, not only can the protective layer be adhered merely by applying pressure, but it is possible to form the adhesive layer with a uniform thickness in advance and maintain that uniform thickness. Moreover, if the post-curing storage elastic modulus of the adhesive layer is in such a range, the resulting optical disc can be made resistant to pressure imprint without causing warpage or other problems.

In the aforementioned invention (Invention 1), the aforementioned adhesive layer preferably contains an energy rays-curable polymer material as a principal component thereof (Invention 2). This energy rays-curable polymer material is preferably an acrylic ester copolymer having energy rays-curable groups in the side chains thereof (Invention 3), and the mean side-chain introduction rate of the energy rays-curable groups is preferably 0.1 to 30 mol% (Invention 4). In this case, the aforementioned energy rays-curable groups are preferably unsaturated groups, and the weight-average molecular weight of the aforementioned acrylic ester copolymer is preferably 100,000 or more (Invention 5).

In the aforementioned invention (Invention 2), the aforementioned energy rays-curable polymer material may be a mixture of an acrylic ester copolymer having energy rays-curable groups in the side chains thereof and an energy rays-curable multifunctional monomer and/or oligomer (Invention 6), or may be a mixture of an acrylic ester copolymer having no energy rays-curable groups and an energy rays-curable multifunctional monomer and/or oligomer (Invention 7).

Optical disc manufacturing sheets of the aforementioned inventions (Inventions 1 to 7) may comprise the aforementioned adhesive layer and a protective layer (Invention 8).

Secondly, the present invention provides an optical disc manufactured using the aforementioned optical disc manufacturing sheet (Inventions 1 to 8), wherein the aforementioned protective layer is adhered by means of the aforementioned adhesive layer which has been cured.

BRIEF DESCRIPTION OF THE DRAWINGS

Figure 1 is a cross-section of an optical disc manufacturing sheet according to a first embodiment of the present invention.
Figure 2 shows cross-sections illustrating one example of an optical disc manufacturing method using an optical disc manufacturing sheet according to this embodiment.
Figure 3 shows cross-sections illustrating another example of an optical disc manufacturing method using an optical disc manufacturing sheet according to this embodiment.
Figure 4 is a cross-section of an optical disc manufacturing sheet according to a second embodiment of the present invention.
Figure 5 shows cross-sections illustrating one example of an optical disc manufacturing method using an optical disc manufacturing sheet according to this embodiment.

BEST MODE FOR CARRYING OUT THE INVENTION

The embodiments of the present invention are explained below

[First embodiment]

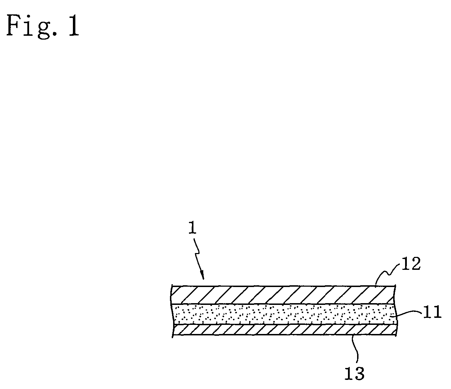

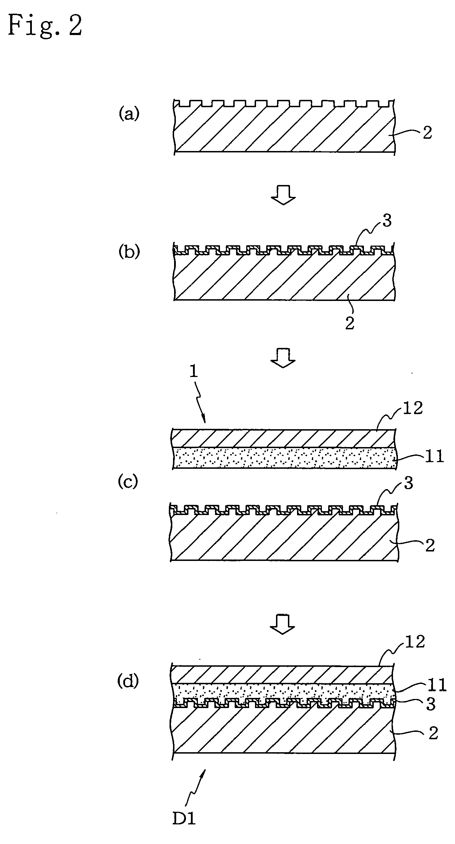

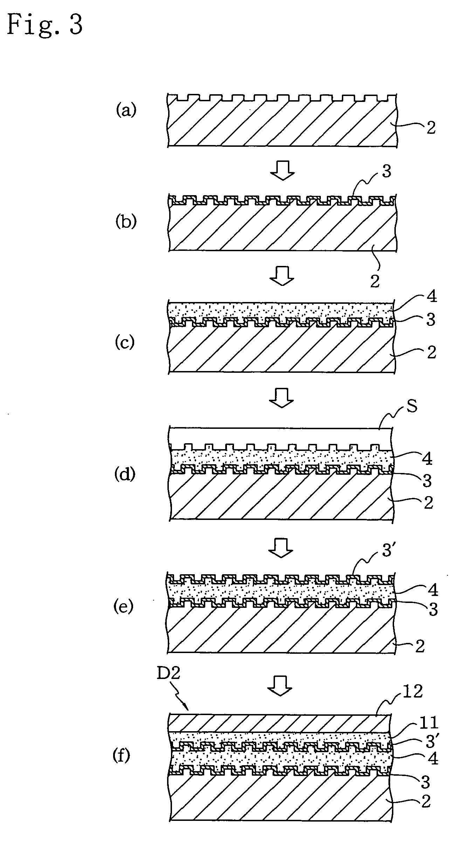

Figure 1 is a cross-section of an optical disc manufacturing sheet according to a first embodiment of the present invention, while Figures 2(a) through 2(d) are cross-sections illustrating one example of an optical disc manufacturing method using an optical disc manufacturing sheet according to this embodiment, and Figure 3(a) through 3(f) are cross-sections illustrating another example of an optical disc manufacturing method using an optical disc manufacturing sheet according to this embodiment.

As shown in Figure 1, optical disc manufacturing sheet 1 of this embodiment consists of adhesive layer 11, protective sheet 12 which is laminated on one surface (upper surface in Figure 1) of adhesive layer 11, and release sheet 13 which is laminated on the other surface (lower surface in Figure 1) of adhesive layer 11. Protective sheet 12 becomes the protective layer of an optical disc, and release sheet 13 is peeled off when optical disc manufacturing sheet 1 is used.

The purpose of adhesive layer 11 is to bond together the data-recording layer of an optical disc and protective sheet 12 (see Figures 2 and 3). The pre-curing storage elastic modulus of this adhesive layer 11 is $10^3$ to $10^6$ Pa, preferably $10^4$ to $10^5$ Pa. The post-curing storage elastic modulus of adhesive layer 11 is $10^7$ to $10^{11}$ Pa, preferably $10^8$ to $10^{10}$ Pa.

The measurement temperature for the pre-curing storage elastic modulus is the same temperature as that of the working environment in which optical disc manufacturing sheet 1 is to be bonded by pressure to the object of adhesion. Since in general optical disc manufacturing sheet 1 will be bonded by pressure at room temperature to the object of adhesion, the storage elastic modulus is measured at room temperature. The temperature for measuring the post-curing storage elastic modulus is the same temperature as that of the storage environment of the resulting optical disc, or in other words room temperature.

If the pre-curing storage elastic modulus of adhesive layer 11 is within such a range, not only can the protective layer and the data-recording layer be adhered merely by applying pressure, but it is possible to form the adhesive layer with a uniform thickness in advance and maintain that uniform thickness. If the pre-curing storage elastic modulus of adhesive layer 11 is less than $10^3$ Pa, adhesive layer 11 is likely to deform, making it difficult to maintain a uniform thickness. If the pre-curing storage elastic modulus of adhesive layer 11 exceeds $10^5$ Pa, adhesive layer 11 will be less likely to conform to the concave-convex pattern (pits or grooves/lands) of the data recording layer when protective sheet 12 is adhered to the data recording layer, so that bubbles may occur due to errors between adhesive layer 11 and the data recording layer.

If the post-curing storage elastic modulus of adhesive layer 11 is within such a range, the resulting optical disc can be made resistant to pressure imprint without causing problems. If the post-curing storage elastic modulus of adhesive layer 11 is less than $10^7$ Pa, adhesive layer 11 is likely to deform due to application of partial pressure, and protective sheet 12 will be liable to pressure imprint. If the post-curing storage elastic modulus of adhesive layer 11 exceeds $10^{11}$ Pa, there will be more warping of the optical disc due to volumetric shrinkage as adhesive layer 11 hardens, causing such problems as reduced adhesiveness.

Adhesive layer 11 preferably has a polymer component with energy rays-curable properties as a principal component thereof, but alternatively it may have a mixture of a polymer component without energy rays-curable properties and an energy rays-curable multifunctional monomer and/or oligomer as a principal component thereof. In either case, adhesive layer 11 preferably exhibits pressure-sensitive adhesiveness (stickiness) before it is cured, and has strong adhesiveness and a suitable hardness after curing.

The case of an adhesive layer 11 containing a polymer component with energy rays-curing properties as a principal component thereof is explained below.

The polymer component with energy rays-curing properties which makes up adhesive layer 11 is preferably an acrylic ester copolymer having energy rays-curable groups in the side chains thereof. Moreover, this acrylic ester copolymer is preferably an energy rays-curable copolymer (A) with a molecular weight of 100,000 or more having energy rays-curable groups in the side chains thereof which is obtained by the reaction of an acrylic copolymer (a1) having functional group-containing monomer units and an unsaturated group-containing compound (a2) having substitutional groups which bind to those functional groups.

The mean side-chain introduction rate of the energy rays-curable groups is preferably 0.1 to 30 mol%, more preferably 5 to 15 mol%. If the mean side-chain introduction rate of the energy rays-curable groups is less than 0.1 mol%, the desired energy rays-curing properties will not be obtained, while if the mean side-chain introduction rate of the energy rays-curable groups is more than 30 mol%, there may be warpage of the optical disc due to volumetric shrinkage accompanying curing of adhesive layer 11.

The mean side-chain introduction rate of the energy rays-curable groups is calculated by the following formula:

Mean side-chain introduction rate of energy rays-curable groups = (mole number of energy rays-curable groups/total mole number of monomers making up acrylic copolymer) $\times$ 100.

The acrylic copolymer (a1) consists of a constituent unit derived from a functional group-containing monomer and a constituent unit derived from a (meth)acrylic ester monomer or derivative thereof. In these Specifications, a (meth)acrylic ester monomer signifies an acrylic ester monomer and/or a methacrylic ester monomer.

The functional group-containing monomer of acrylic copolymer (a1) is a monomer having a polymerizable double bond and a hydroxyl, carboxyl, amino, substituted amino, epoxy or other functional group in the molecule, and preferably a hydroxyl group-containing unsaturated compound or carboxyl group-containing unsaturated compound is used.

More specific examples of such functional group-containing monomers include 2-hydroxyethylacrylate, 2-hydroxyethylmethacrylate, 2-hydroxypropylacrylate, 2-hydroxypropylmethacrylate and other hydroxyl group-containing acrylates, and acrylic acid, methacrylic acid, itaconic acid and other carboxyl group-containing compounds, and these can be used independently or in combinations of two or more.

Preferably the functional group-containing monomer is selected so that carboxyl groups are present in the energy rays-curing copolymer. If carboxyl groups are present in the energy rays-curing copolymer the adhesive strength between adhesive layer 11 and the data recording layer becomes to be higher, and the resulting optical disc becomes to be stronger and more durable.

The amount of carboxyl groups present in the energy rays-curing copolymer is preferably 0.01 to 30 mol%, more preferably 0.5 to 20 mol% by monomer conversion. When these carboxyl groups react with the unsaturated group-containing compound (a2) described below (when the functional group-containing monomer is the carboxyl group-containing monomer), the carboxyl group content is a value calculated based on:

(mole number of carboxyl group-containing monomers) - (mole number of unsaturated group-containing compound).

Cycloalkyl(meth)acrylate, benzyl(meth)acrylate, or an alkyl(meth)acrylate with 1 to 18 carbon atoms in the alkyl group can be used as the (meth)acrylic ester monomer which makes up acrylic copolymer (a1). Of these, it is particularly desirable to use an alkyl(meth)acrylate with 1 to 18 carbon atoms in the alkyl group, such as methyl(meth)acrylate, ethyl(meth)acrylate), propyl(meth)acrylate, n-butyl(meth)acrylate, 2-ethylhexyl(meth)acrylate or the like.

Acrylic copolymer (a1) normally contains the aforementioned constituent unit derived from a functional group-containing monomer at a rate of 0.5% to 100 mol%, preferably 1 to 40 mol%, more preferably 3 to 30 mol%, and the constituent unit derived from a (meth)acrylic ester monomer or derivative thereof at a rate of 0 to 99.5% mol%, preferably 60 to 99 mol%, more preferably 70 to 97 mol%.

Acrylic copolymer (a1) is obtained by copolymerizing such a functional group-containing monomer and (meth)acrylic ester monomer by ordinary methods, but dimethylacrylamide, vinyl formate, vinyl acetate, styrene or the like can also be copolymerized in small quantities (such as 10 mol% or less, preferably 5 mol% or less) in addition to these monomers.

Energy-curable copolymer (A) is obtained by reacting acrylic copolymer (a1) having the aforementioned functional group-containing monomer units with unsaturated group-containing compound (a2) having a substitutional group which binds to that functional group.

The substitutional group of unsaturated group-containing compound (a2) can be selected appropriately according to the type of functional group in the functional group-containing monomer units of acrylic copolymer (a1). For example, if the functional group is a hydroxyl, amino or substituted amino group, an isocyanate or epoxy group is desirable as the substitutional group, while if the functional group is a carboxyl group, an aziridinyl, isocyanate, epoxy or oxazoline group is desirable as the substitutional group, and if the functional group is an epoxy group, an amino, carboxyl or azirdinyl group is desirable as the substitutional group. Each molecule of unsaturated group-containing compound (a2) contains one such substitutional group.

Unsaturated group-containing compound (a2) contains 1 to 5, preferably 1 or 2 energy-polymerizable carbon-carbon double bonds per molecule. Specific examples of this unsaturated group-containing compound (a2) include methacryloyloxyethyl isocyanate, meta-isopropenyl-$\alpha$, $\alpha$-dimethylbenzyl isocyanate, methacryloyl isocyanate and allyl isocyanate; acryloyl monoisocyanate compounds obtained by reaction of diisocyanate compounds or polyisocyanate compounds with hydroxyethyl(meth)acrylate; acryloyl monoisocyanate compounds obtained by reaction of diisocyanate compounds or polyisocyanate compounds, polyol compounds and hydroxyethyl(meth)acrylate; glycidyl(meth)acrylate; and (meth)acrylic acid, 2-(1-aziridinyl)ethyl(meth)acrylate, 2-vinyl-2-oxazoline, 2-isopropenyl-2-oxazoline and the like.

Unsaturated group-containing compound (a2) is used at a rate of normally 5 to 100 equivalents, preferably 10 to 90 equivalents, more preferably 20 to 80 equivalents per 100 equivalents of the functional group-containing monomer of the aforementioned acrylic copolymer (a1).

In reacting acrylic copolymer (a1) and unsaturated group-containing compound (a2), the reaction temperature, pressure, solvent, time, presence or absence of catalyst, and type of catalyst can be selected appropriately according to the combination of functional group and substitutional group. As a result, the functional groups in the side chains of the acrylic copolymer (a1) react with the substitutional groups in the unsaturated group-containing compound (a2), the unsaturated groups are introduced into the side chains of the acrylic copolymer (a1), and an energy rays-curable copolymer (A) is obtained. The reaction rate of the functional groups and substitutional groups in this reaction is normally 70%, more preferably 80% or more, and unreacted functional groups may be left in energy rays-curable copolymer (A).

The weight-average molecular weight of the energy rays-curable copolymer (A) obtained in this way is preferably 100,000 or more, more preferably 150,000 to 1,500,000 or still more preferably 200,000 to 1,000,000.

When the energy rays are in the form of ultraviolet rays, the polymerization curing time and irradiation dose can be reduced by adding a photopolymerization initiator (B) to the aforementioned energy rays-curable copolymer (A).

Specific examples of this photopolymerization initiator (B) include benzophenone, acetophenone, benzoin, benzoin methyl ether, benzoin ethyl ether, benzoin isopropyl ether, benzoin isobutyl ether, benzoin benzoate, benzoin benzoate methyl, benzoin dimethyl ketal, 2,2-dimethoxy-1,2-diphenylethane-1-one, 2,4-diethyl thioxanthone, 1-hydroxycyclohexyl phenyl ketone, benzyl diphenylsulfide, tetramethylthiuram monosulfide, azobisisobutyronitrile, benzyl, dibenzyl, diacetyl, $\beta$-chloroanthraquinone, (2,4,6-trimethylbenzyldiphenyl)phosphine oxide, 2-benzothiazole-N, N-diethyldithiocarbamate, oligo{2-hydroxy-2-methyl-1-[4-(1-propenyl)phenyl]propanone} and the like. These may be used alone or in combinations of two or more.

Photopolymerization initiator (B) is preferably used in an amount of 0.1 to 10 parts by weight, preferably 0.5 to 5 parts by weight per 100 parts by weight of energy rays-curable copolymer (A) (when the energy rays-curable multifunctional monomer or oligomer component (D) described below is added, per 100 parts by weight of the total of energy rays-curable copolymer (A) and energy rays-curable multifunctional monomer or oligomer component (D)).

In the aforementioned adhesive layer 11, other suitable components may be added with energy rays-curable copolymer (A) and photopolymerization initiator (B). Examples of other components include polymer components or oligomer components (C) which are not energy rays-curable, energy rays-curable multifunctional monomer or oligomer components (D), crosslinking agents (E) and other additives (F).

Examples of the polymer components or oligomer components (C) which are not energy rays-curable include polyacrylic acid ester, polyester, polyurethane, polycarbonate, polyolefin and the like, and a polymer or oligomer with a weight-average molecular weight of 3,000 to 2.5 million is desirable.

Examples of energy rays-curable multifunctional monomer or oligomer components (D) include trimethylolpropane tri(meth)acrylate, pentaerythritol tri(meth)acrylate, pentaerythritol tetra(meth)acrylate, dipentaerythritol hexa(meth)acrylate, 1,4-butanediol di(meth)acrylate, 1,6-hexanediol di(meth)acrylate, polyethyleneglycol di(meth)acrylate, polyester oligo(meth)acrylate, polyurethane oligo(meth)acrylate and the like.

A multifunctional compound having reactivity with a functional group of energy rays-curable copolymer (A) or the like can be used as the crosslinking agent (E). Examples of such multifunctional compounds include isocyanate compounds, epoxy compounds, amine compounds, melamine compounds, aziridine compounds, hydrazine compounds, aldehyde compounds, oxazoline compounds, metal alkoxide compounds, metal chelate compounds, metal salts, ammonium salts, reactive phenol resins and the like.

Examples of other additives (F) include ultraviolet absorbers, anti-oxidants, tackifiers, dyes, coupling agents and the like.

Pre-curing tackiness and release properties, post-curing strength, adhesiveness with other layers, storage stability and the like can be improved by compounding these other components (C) through (F) with adhesive layer 11. There are no particular limits on the added amounts of these other components, which can be determined appropriately in the range of 0 to 150 parts by weight per 100 parts by weight of energy rays-curable copolymer (A).

Next, the case of an adhesive layer 11 containing a mixture of a non-energy rays-curable polymer component and an energy rays-curable multifunctional monomer or oligomer as a principal component thereof is explained below.

A component similar to the acrylic copolymer (a1) described above for example can be used as the polymer component in such an adhesive layer 11. Selecting an acrylic copolymer having a carboxyl group as the functional group as this acrylic copolymer (a1) is desirable because it increases the adhesive strength of adhesive layer 11 with the data recording layer.

The energy rays-curable multifunctional monomer or oligomer may be the same as component (D) above. The mixture ratio of the energy rays-curable multifunctional monomer or oligomer to the polymer component is preferably 10 to 150 parts by weight, more preferably 25 to 100 parts by weight of the multifunctional monomer or oligomer per 100 parts by weight of the polymer component.

The other additives (F) described above may be added in this adhesive layer 11. The added amount of the aforementioned other additives (F) is preferably 0 to 50 parts by weight, more preferably 0 to 20 parts by weight of total additives (F) per 100 parts by weight of energy rays-curable copolymer (A) for example.

The thickness of adhesive layer 11 is determined by the depth of the concave-convex pattern (pits or grooves/lands) of the data recording layer, but is normally about 3 to 30 $\mu$m, preferably 15 to 25 $\mu$m.

Protective sheet 12 in this embodiment is for protecting the data recording layer of the optical disc, and forms the light-receiving surface of the optical disc.

The material of protective sheet 12 may basically be any having adequate optical transparency with respect to the light wavelength range for data reproduction or recording, but for purposes of easy optical disc manufacture a suitably rigid or flexible material is desirable, while for purposes of optical disc storage it should preferably be stable with respect to temperature. Examples of such materials include resins such as polycarbonate, polymethyl methacrylate and polystyrene.

The linear expansion coefficient of protective sheet 12 should be roughly the same as the linear expansion coefficient of the optical disc substrate so as not to cause warpage of the optical disc at high temperatures. For example, if the optical disc substrate is polycarbonate resin, protective sheet 12 should preferably be of the same polycarbonate resin.

The thickness of protective sheet 12 is determined by the type of optical disc, the thickness of other layers and the like, but is normally about 25 to 300 $\mu$m, preferably about 50 to 200 $\mu$m.

A known sheet can be used as release sheet 13, and for example a polyethylene terephthalate, polypropylene or other resin film treated with a silicone release agent or the like can be used.

So as to contribute smoothness to adhesive layer 11, the surface roughness (Ra) of the side of release sheet 13 which is treated with the release agent (side which contacts adhesive layer 11) is preferably 0.1 $\mu$m or less. The thickness of release sheet 13 is normally about 10 to 200 $\mu$m, preferably about 20 to 100 $\mu$m.

Optical disc manufacturing sheet 1 of this embodiment is obtained by preparing a coating agent containing the adhesive which will make up adhesive layer 11 together with a solvent if desired, applying it to protective sheet 12 with a kiss roll coater, reverse roll coater, knife coater, roll knife coater, die coater or other coating machine and drying it to form adhesive layer 11, after which the release-treated surface of release sheet 13 is laid over the surface of adhesive layer 11 and the two are laminated together, or else by applying the aforementioned coating agent to the release-treated surface of release sheet 13 and drying it to form adhesive layer 11, after which protective sheet 12 is laminated onto the surface of adhesive layer 11.

Next, an example of a method of manufacturing optical disc D1 (single-sided, single-layer) using the aforementioned optical disc manufacturing sheet 1 is explained.

First, as shown in Figure 2(a), optical disc substrate 2 is manufactured having a concave-convex pattern of pits or grooves/lands. This optical disc substrate 2 is normally made of polycarbonate, and can be formed by a molding method such as injection molding.

As shown in Figure 2(b), reflective layer 3 is formed by a method such as sputtering on the concave-convex pattern of the aforementioned optical disc substrate 2. Reflective layer 3 may be a monolayer or may be a multilayer consisting of a reflective layer, a dielectric layer, a phase change layer and a dielectric layer and the like for example.

Next, as shown in Figure 2(c), release sheet 13 of optical disc manufacturing sheet 1 is peeled off, exposing adhesive layer 11, and as shown in Figure 2(d), adhesive layer 11 is bonded by pressure to the surface of reflective layer 3 on optical disc substrate 2.

At this stage, adhesive layer 11 is irradiated with energy rays using an energy ray irradiation apparatus either through protective sheet 12 or optical disc substrate 2 to cure adhesive layer 11 and obtain optical disc D1.

An ultraviolet ray, electron ray or the like can be used as the energy ray. The irradiation dose depends on the type of energy ray but for example is preferably about 100 to 500 mJ/cm$^2$ in the case of ultraviolet ray or about 10 to 1000 krad in the case of an electron ray.

Next, another example of a method of manufacturing an optical disc D2 (single-sided, double-layer) using the aforementioned optical disc manufacturing sheet 1 is explained.

First, as in the aforementioned method of manufacturing optical disc D1, optical disc substrate 2 is manufactured with a concave-convex pattern of pits or grooves/lands, and reflective layer 3 is formed on the concave-convex pattern of optical disc substrate 2 as shown in Figures 3(a) and (b). Like the reflective layer 3 in the aforementioned method of manufacturing optical disc D1, reflective layer 3 may be a monolayer or a multilayer.

Next, as shown in Figure 3(c), stamper receiving layer 4 consisting of an energy rays-curable material is formed on reflective layer 3 on optical disc substrate 2. This stamper receiving layer 4 can be formed by applying a coating agent of an energy rays-curable material by spin coating or the like, but preferably stamper receiving layer 4 is first formed on the release sheet, and stamper receiving layer 4 is laminated to reflective layer 3, after that the release sheet is peeled off.

Next, as shown in Figure 3(d), stamper S is pressed to the surface of stamper receiving layer 4 to transfer the concave-convex pattern of stamper S onto stamper receiving layer 4. At this stage, stamper receiving layer 4 is irradiated with energy rays using an energy ray irradiation apparatus through either stamper S or optical disc substrate 2 to cure stamper receiving layer 4.

Stamper S is composed of a nickel alloy or other metal material or a transparent resin material such as norbornene resin. Although the stamper S shown in Figure 3(d) is in plate form, it is not limited thereby and could be in roll form for example.

Once stamper receiving layer 4 is cured, stamper S is separated from stamper receiving layer 4. Once the concave-convex pattern of stamper S has been transferred and fixed on stamper receiving layer 4 in this way to form pits or grooves/lands, semitransparent reflective layer 3' is formed by a means such as sputtering on the concave-convex pattern of stamper receiving layer 4 as shown in Figure 3(e). This semitransparent reflective layer 3' may be a monolayer or may be a multilayer consisting of a transparent reflective layer, a dielectric layer, a phase change layer and a dielectric layer and the like for example.

Next, release sheet 13 of optical disc manufacturing sheet 1 is peeled off to expose adhesive layer 11, and this adhesive layer 11 is bonded by pressure to semitransparent reflective layer 3' as shown in Figure 3(f).

At this stage, adhesive layer 11 is irradiated with energy rays using an energy ray irradiation apparatus either through protective sheet 12 or optical disc substrate 2 to cure adhesive layer 11 and obtain optical disc D2.

In the optical discs D1 and D2 obtained as described above, because protective sheet 12 is adhered by means of adhesive layer 11 the pre-curing storage elastic modulus of which is $10^3$ to $10^6$ Pa and the thickness of which has been controlled in advance, adhesive layer 11 has no thickness irregularities and the uniformity of layer thickness required for the product is maintained.

Because the adhesive layer 11 which is cured in optical discs D1 and D2 has a storage elastic modulus of $10^7$ Pa or more it resists deformation when subjected to partial pressure, so optical discs D1 and D2 have excellent resistance to pressure imprint. Moreover, because the cured adhesive layer 11 has a storage elastic modulus of $10^{11}$ Pa or more, there is almost no warpage of optical discs D1 and D2 due to volumetric shrinkage accompanying curing of adhesive layer 11.

The manufacturing method for an optical disc described above is only one example, and the method for manufacturing an optical disc using an optical disc manufacturing sheet according to this embodiment is not limited by these manufacturing methods.

[Second embodiment]

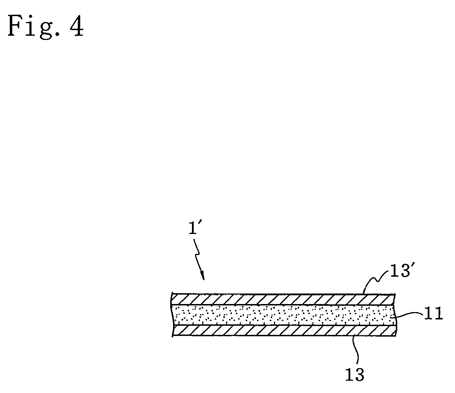

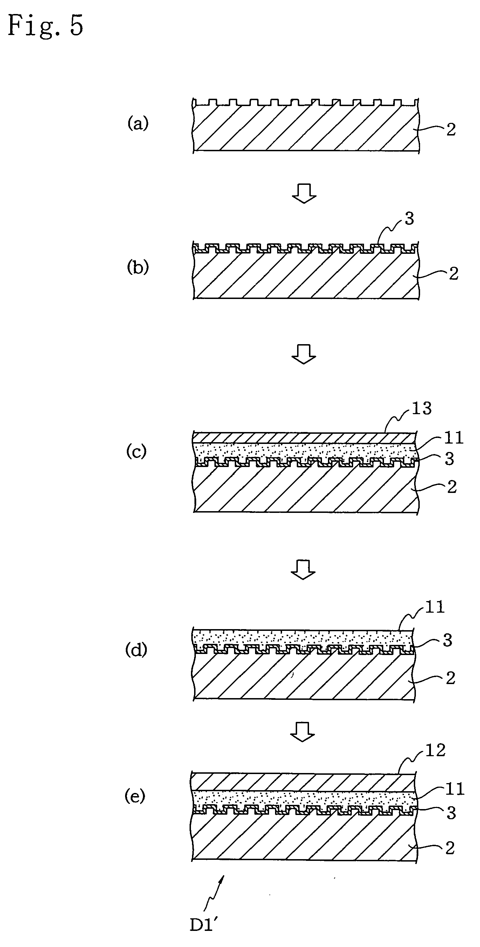

Figure 4 is a cross-section showing an optical disc manufacturing sheet according to the second embodiment of the present invention, while Figures 5(a) through 5(e) are cross-sections illustrating one example of the method for manufacturing an optical disc using an optical disc manufacturing sheet according to this embodiment.

As shown in Figure 4, optical disc manufacturing sheet 1' of this embodiment consists of adhesive layer 11 and release sheets 13 and 13' which are laminated on either side of adhesive layer 11. Release sheets 13 and 13' are peeled off when optical disc manufacturing sheet 1 is used.

Adhesive layer 11 is made of a material similar to that of adhesive layer 11 of optical disc manufacturing sheet 1 of the aforementioned first embodiment, and has a similar thickness. Moreover, release sheets 13 and 13' may be similar to release sheet 13 of optical disc manufacturing sheet 1 of the aforementioned first embodiment. However, preferably one of release sheets 13 and 13' is of the light-release type while the other is of the heavy-release type. In this embodiment, release sheet 13' is of the light-release type while release sheet 13 is of the heavy-release type.

Optical disc manufacturing sheet 1' of this embodiment is obtained by preparing a coating agent containing the adhesive which will make up adhesive layer 11 together with a solvent if desired, applying it to the release-treated surface of release sheet 13 (or release sheet 13') with a kiss roll coater, reverse roll coater, knife coater, roll knife coater, die coater or other coating machine and drying it to form adhesive layer 11, after which the release-treated surface of release sheet 13' (or release sheet 13) is laid over the surface of adhesive layer 11 and the two are laminated together.

Next, an example of a method of manufacturing optical disc D1' (single-sided single-layer) using the aforementioned optical disc manufacturing sheet 1' is explained.

First, as in the aforementioned method of manufacturing optical disc D1 using optical disc manufacturing sheet 1 according to the first embodiment, optical disc substrate 2 is manufactured with a concave-convex pattern of pits or grooves/lands, and reflective layer 3 is formed on the concave-convex pattern of that optical disc substrate 2 as shown in Figures 5(a) and 5(b). Like the aforementioned reflective layer 3 of the first embodiment, reflective layer 3 may be a monolayer or a multilayer.

Next, release sheet 13' of optical disc manufacturing sheet 1' is peeled off, exposing adhesive layer 11, and adhesive layer 11 is bonded by pressure to the surface of reflective layer 3 on optical disc substrate 2 as shown in Figure 5(c). Then, as shown in Figure 5(d), release sheet 13 is peeled off adhesive layer 11 to expose adhesive layer 11, and protective sheet 12 is bonded by pressure to the exposed adhesive layer 11 as shown in Figure 5(e). A protective sheet similar to the protective sheet 12 of optical disc manufacturing sheet 1 in the first embodiment can be used as protective sheet 12.

At this stage, adhesive layer 11 is irradiated with energy rays using an energy ray irradiation apparatus either through protective sheet 12 or optical disc substrate 2 to cure adhesive layer 11 and obtain optical disc D1'.

A single-sided, double-layer optical disc can also be manufactured by methods similar to the aforementioned.

The embodiments explained above are described in such a way as to facilitate understanding of the present invention and are not intended to limit the present invention. Consequently, the various elements disclosed in the aforementioned embodiments are intended to comprise all design changes and equivalents which fall within the technical scope of the present invention.

For example, release sheet 13 or release sheet 13' of optical disc manufacturing sheet 1 or 1' may be omitted.

[Examples]

The present invention is explained in detail below using examples and the like, but the scope of the present invention is not limited by these examples and the like.

[Example 1]

n-butylacrylate and acrylic acid were polymerized at a mole ratio of 69.22:30.78 in ethyl acetate to obtain an acrylic copolymer (a1) solution (solids concentration 30% by weight).

Methacryloyloxyethyl isocyanate was added as an unsaturated group-containing compound (a2) to the aforementioned acrylic copolymer solution, and the isocyanate groups of the methacryloyloxyethyl isocyanate were reacted with the carboxyl groups of the acrylic copolymer to obtain an energy rays-curable acrylic ester copolymer (A) with a mean side-chain introduction rate of 9.24 mol% of the methacryloyl groups which are the energy rays-curable groups and a weight-average molecular weight (Mw) of 680,000.

5 parts by weight of 2,2-dimethoxy-1,2-diphenylethane-1-one as the photopolymerization initiator and 1.7 parts by weight of an isocyanate type crosslinking agent (manufactured by NIPPON POLYURETHANE INDUSTRY CO., LTD., Coronate L) as the crosslinking agent were added per 100 parts by weight solid fraction of the resulting acrylic ester copolymer (A) having energy rays-curable groups, and this was prepared to a solid concentration of 25% by weight as the coating agent for the adhesive layer.

The aforementioned coating agent for the adhesive layer was applied to the release-treated surface of a release sheet consisting of polyethylene terephthalate film release treated on one side with silicone resin (manufactured by LINTEC Corporation, SP-PET 3811, thickness 38 $\mu$m, surface roughness (Ra) 0.016 $\mu$m) using a knife coater so as to achieve a dried film thickness of 22 $\mu$m, and dried for 1 minute at 90°C to form the adhesive layer.

This adhesive layer and a polycarbonate film as a protective sheet (manufactured by TEIJIN LTD., Pure-Ace C110-78, thickness 78 $\mu$m) were laminated together and aged for 1 week to obtain optical disc manufacturing sheet A.

[Example 2]

Methacryloyloxyethyl isocyanate was added as unsaturated group-containing compound (a2) to an acrylic copolymer (a1) solution obtained as in Example 1, and the isocyanate groups of the methacryloyloxyethyl isocyanate were reacted with the carboxyl groups of the acrylic copolymer to obtain an energy rays-curable acrylic ester copolymer (A) with a mean side-chain introduction rate of 18.48 mol% of the methacryloyl groups which are the energy rays-curable groups and a weight-average molecular weight (Mw) of 760,000.

A coating agent for the adhesive layer was prepared as in Example 1 using the resulting acrylic ester copolymer (A) with energy rays-curable groups, and used to prepare optical disc manufacturing sheet B.

[Example 3]

100 parts by weight of a composition consisting of an energy rays-curable multifunctional monomer and an energy rays-curable multifunctional oligomer (manufactured by Dainichiseika Colors and Chemicals Mfg. Co., Ltd., SEIKA-BEAM 14-29B (NPI)) was added as solid fraction to 100 parts by weight solid fraction of an acrylic ester copolymer (A) with energy rays-curable groups obtained as in Example 1, 10.0 parts by weight of 2,2-dimethoxy-1,2-diphenylethane-1-one as the photopolymerization initiator and 3.3 parts by weight of an isocyanate type crosslinking agent (manufactured by NIPPON POLYURETHANE INDUSTRY CO., LTD., Coronate L) as the crosslinking agent were added, and this was prepared to a solid concentration of 40% by weight as the coating agent for the adhesive layer.
Optical disc manufacturing sheet C was prepared as in Example 1 using the resulting coating agent for the adhesive layer.

[Example 4]

n-butylacrylate, butyl methacrylate, hydroxyethyl acrylate and dimethyl acrylamide were polymerized at mole ratios of 20.91:64.08:1.47:13.54 in ethyl acetate to obtain an acrylic copolymer (a1) solution (solids concentration 35% by weight).
70 parts by weight as solid fraction of a composition consisting of an energy rays-curable multifunctional monomer and an energy rays-curable multifunctional oligomer (manufactured by Dainichiseika Colors and Chemicals Mfg. Co., Ltd., SEIKA-BEAM 14-29B (NPI)) was added to 100 parts by weight solid fraction of the resulting acrylic copolymer (a1) solution, 8.5 parts by weight of 2,2-dimethoxy-1,2-diphenylethane-1-one as the photopolymerization initiator and 2.8 parts by weight of an isocyanate type crosslinking agent (manufactured by NIPPON POLYURETHANE INDUSTRY CO., LTD., Coronate L) as the crosslinking agent were added, and this was prepared to a solid concentration of 40% by weight as the coating agent for the adhesive layer.
Optical disc manufacturing sheet D was prepared as in Example 1 using the resulting coating agent for the adhesive layer.

[Example 5]

The coating agent for the adhesive layer obtained in Example 1 was applied to the release-treated surface of a heavy-release release sheet consisting of polyethylene terephthalate film release treated on one side with silicone resin (manufactured by LINTEC Corporation, SP-PET 3811, thickness: 38 $\mu$m, surface roughness(Ra): 0.016 $\mu$m) using a knife coater so as to achieve a dried film thickness of 22 $\mu$m, and dried for 1 minute at 90°C to form the adhesive layer.
Next, the release-treated surface of an light-release release sheet consisting of polyethylene terephthalate film release treated on one side with silicone resin (manufactured by LINTEC Corporation, SP-PET 38GS, thickness 38 $\mu$m, surface roughness (Ra) 0.016 $\mu$m) was laid over the adhesive layer surface to obtain optical disc manufacturing sheet E.

[Comparative Example 1]

1 part by weight of an isocyanate type crosslinking agent (manufactured by NIPPON POLYURETHANE INDUSTRY CO., LTD., Coronate L) was added to 100 parts by weight solid fraction of an acrylic copolymer (a1) solution obtained as in Example 1, which was then prepared to a solids concentration of 25% to obtain a coating agent for the adhesive layer without energy rays-curing properties.
Optical disc manufacturing sheet F was prepared as in Example 1 using the resulting coating agent for the adhesive layer.

[Comparative Example 2]

400 parts by weight of a composition consisting of an energy rays-curable multifunctional monomer and an energy rays-curable multifunctional oligomer (manufactured by Dainichiseika Colors and Chemicals Mfg. Co., Ltd., SEIKA-BEAM 14-29B (NPI)) was added as solid fraction to 100 parts by weight solid fraction of an acrylic ester copolymer (A) with energy rays-curable groups obtained as in Example 1, 25 parts by weight of 2,2-dimethoxy-1,2-diphenylethane-1-one as the photopolymerization initiator and 4.1 parts by weight of an isocyanate type crosslinking agent (manufactured by NIPPON POLYURETHANE INDUSTRY CO., LTD., Coronate L) as the crosslinking agent were added, and this was prepared to a solid concentration of 50% by weight as the coating agent for the adhesive layer.

Optical disc manufacturing sheet G was then prepared as in Example 1 using the resulting coating agent for the adhesive layer.

[Comparative Example 3]

n-butylacrylate, methyl methacrylate and acrylic acid were polymerized at mole ratios of 49.51:21.14:29.35 in ethyl acetate to obtain an acrylic copolymer (a1) solution (solids concentration 33% by weight).

Methacryloyloxyethyl isocyanate was added to the aforementioned acrylic copolymer (a1) solution, and the isocyanate groups of the methacryloyloxyethyl isocyanate were reacted with the carboxyl groups of the acrylic copolymer to obtain an energy rays-curable acrylic ester copolymer (A) with a weight-average molecular weight (Mw) of 650,000 and a mean side-chain introduction rate of 0.01 mol% of the methacryloyl groups which are the energy rays-curable groups.

5 parts by weight of 2,2-dimethoxy-1,2-diphenylethane-1-one as the photopolymerization initiator and 0.7 parts by weight (solid fraction) of a metal chelate type crosslinking agent (manufactured by Kawaken Fine Chemicals Co., Ltd., Alumichelate D) as the crosslinking agent were added per 100 parts by weight solid fraction of the resulting acrylic ester copolymer (A) solution having energy rays-curable groups, and this was prepared to a solid concentration of 20% by weight as the coating agent for the adhesive layer.

Optical disc manufacturing sheet H was prepared as in Example 1 using the resulting coating agent for the adhesive layer.

[Comparative Example 4]

5 parts by weight as solids of a composition consisting of an energy rays-curable multifunctional monomer and an energy rays-curable multifunctional oligomer (manufactured by Dainichiseika Colors and Chemicals Mfg. Co., Ltd., SEIKA-BEAM 14-29B (NPI)) was added to 100 parts by weight solid fraction of an acrylic copolymer (a1) solution obtained as in Example 4, 5.3 parts by weight of 2,2-dimethoxy-1,2-diphenylethane-1-one as the photopolymerization initiator and 1.7 parts by weight of an isocyanate type crosslinking agent (manufactured by NIPPON POLYURETHANE INDUSTRY CO., LTD., Coronate L) as the crosslinking agent were added, and this was prepared to a solid concentration of 30% by weight as the coating agent for the adhesive layer.

Optical disc manufacturing sheet I was prepared as in Example 1 using the resulting coating agent for the adhesive layer.

[Test Example 1]

The pre-curing storage elastic modulus of the adhesive layers of optical disc manufacturing sheets A through I which were produced in Examples 1 through 5 and Comparative Examples 1 through 4 were measured at 1Hz and 25°C using a viscoelasticity measuring device (instrument name: Dynamic Analyzer RDA II; manufactured by Rheometrics). The results are shown in Table 1.

[Producing Example]

Polycarbonate optical disc substrates of thickness 1.1 mm, outer diameter 120 mm and inner diameter 15 mm with a concave-convex pattern on one side were molded by injection molding. Reflective layers of aluminum alloy about 150 nm thick were formed by sputtering on the concave-convex patterns of these optical disc substrates.

The optical disc manufacturing sheets A through D and F through I which were produced in Examples 1 through 4 and Comparative Examples 1 through 4 were cut in advance by die punching to the same shapes as the aforementioned optical disc substrates, the release sheets were peeled off, and the exposed adhesive layers and the aforementioned reflective layers of the optical disc substrates were laminated and pressed together by 29N pressure.

The optical disc manufacturing sheet E produced in Example 5 was cut in advance by die punching to the same shape as the aforementioned optical disc substrate, the light-release release sheet was peeled off, and the exposed adhesive layer and the aforementioned reflective layer of the optical disc were laminated and pressed together by 29N pressure. Next, the heavy-release release sheet was peeled off and the exposed adhesive layer and a protective sheet similar to the protective sheet used in Example 1 (previously cut to the same shape as the optical disc substrate) were laminated and pressed together by 29N pressure.

Next, the optical disc manufacturing sheets other than F were exposed to ultraviolet ray through the protective sheet (instrument name: Adwill RAD-2000m/8; manufactured by LINTEC Corporation was used; irradiation conditions: luminance of 130 mW/cm$^2$, light quantity of 400 mJ/cm$^2$) to cure the adhesive layer and obtain optical discs A through I.

[Test Example 2]

(1) Post-curing storage elastic modulus

The (post-curing) storage elastic modulus of the adhesive layers of optical discs A through I (except F) obtained in the producing example were measured at 3.5 Hz and 25°C using a viscoelasticity measurement device (instrument name: Rheovibron DDV-II-EP ;manufactured by Orientec Co., Ltd.). The results are shown in Table 1.

(2) Uniformity of adhesive layer thickness

The optical disc manufacturing sheets A through I which were produced in Examples 1 through 5 and Comparative Examples 1 through 4 were cut in advance by die punching to the same shapes as the optical disc substrates. At this point the thickness irregularities of the adhesive layers of the optical disc manufacturing sheets were observed by mercury lamp projection method.

Mercury lamp projection method was accomplished by placing an optical disc manufacturing sheet between a mercury lamp (manufactured by USHIO INC, light source: SX-01250HQ, mercury lamp power source: BA-H250) and a white projection screen, and visually observing the image of the optical disc manufacturing sheet projected on the projection screen. The distance between the mercury lamp and the optical disc manufacturing sheet was 170 cm, and the distance between the optical disc manufacturing sheet and the projection screen was 30 cm.

In the aforementioned mercury lamp projection method, when there are local thickness irregularities in the adhesive layer they can be confirmed visually because shadows appear on the project screen. The results are shown in Table 1. In Table 1, a circle means that no thickness irregularities were seen and an X means that thickness irregularities were seen.

(3) Pressure imprint resistance

A jig was prepared having two iron wires 0.67 mmφ in diameter and 20 mm long arranged parallel to one another at a distance of 10 mm. In an environment of 23°C, relative humidity 65%, the aforementioned optical discs A through I were placed on a flat workbench with the protective sheets up, and the aforementioned jig was mounted on the protective sheets of optical discs A through I as weight was applied to the jig to a total weight of 500 g. After 24 hours in this condition, the waviness curves of the deformed parts of the protective sheets of optical discs A through I were measured in accordance with JIS B0601, and deformation was calculated by the following formula:

$$\text{Deformation } (\mu m) = Wt - Wti$$

Wt: Maximum cross-sectional height of waviness curve after 24 hours under load
Wti: Previously-measured maximum cross-sectional height before load (mean of 6 values measured at 6 points on one optical disc)

A surface roughness gauge (manufactured by Mitutoyo Corporation, SV3000S4) was used to measure the waviness curves (with cut-off values of $\lambda f = 2.5$ mm, $\lambda c = 0.08$ mm). The results are shown in Table 1.

(4) Adhesive strength

The adhesive strength of optical disc manufacturing sheets A through I produced in Examples 1 through 5 and Comparative Examples 1 through 4 was measured by the 180 degree peeling method according to JIS Z0237. Adhesive strength was measured after each optical disc manufacturing sheet with the release sheet peeled off had been stuck to a test plate (SUS 304 steel plate), and the adhesive layer had been cured by irradiating ultraviolet ray (instrument name: Adwill RAD-2000m/8; manufactured by LINTEC Corporation was used; irradiation conditions:

$$\text{luminance of 130 mW/cm}^2, \text{ light quantity of 400 mJ/cm}^2).$$

In the case of optical disc manufacturing sheet E produced in Example 5, adhesive strength was measured by the aforementioned measurement method after the light-release release sheet had been removed from optical disc manufacturing sheet E and a polycarbonate film (manufactured by TEIJIN LTD., Pure-Ace C110-78, thickness 78 $\mu$m) had been bonded by 29N pressure to the exposed adhesive layer.

The results are shown in Table 1. The adhesiveness of an optical disc manufacturing sheet can be considered good if adhesive strength measured by the aforementioned method is 150 mN/25 mm or more.

Table 1

| | Storage elastic modulus (Pa) | | Adhesive layer thickness uniformity uniformity |
|---|---|---|---|
| | Pre-curing | Post-curing | |
| Example 1 | $2.2 \times 10^5$ | $2.3 \times 10^8$ | ○ |
| Example 2 | $3.4 \times 10^5$ | $2.6 \times 10^8$ | ○ |
| Example 3 | $1.0 \times 10^4$ | $1.6 \times 10^9$ | ○ |
| Example 4 | $1.4 \times 10^4$ | $7.6 \times 10^8$ | ○ |
| Example 5 | $2.2 \times 10^5$ | $2.3 \times 10^8$ | ○ |
| Comparative Example 1 | $1.1 \times 10^5$ | - | ○ |
| Comparative Example 2 | $6.8 \times 10^2$ | $6.3 \times 10^{11}$ | × |
| Comparative Example 3 | $2.6 \times 10^6$ | $5.2 \times 10^6$ | ○ |
| Comparative Example 4 | $3.3 \times 10^4$ | $1.9 \times 10^5$ | ○ |

| | Pressure imprint resistance | | Adhesive strength strength (mN/25mm) |
|---|---|---|---|
| | Evaluation | Deformation Deformation ($\mu$m) | |
| Example 1 | ○ | 0.04 | 280 |
| Example 2 | ○ | 0.01 | 170 |
| Example 3 | ○ | 0.00 | 330 |
| Example 4 | ○ | 0.01 | 400 |
| Example 5 | ○ | 0.04 | 280 |
| Comparative Example 1 | × | 0.75 | 1200 |
| Comparative Example 2 | ○ | 0.00 | 30 |
| Comparative Example 3 | Δ | 0.54 | 70 |
| Comparative Example 4 | × | 0.72 | 990 |

As shown in Table 1, the uniformity of thickness of the adhesive layer, pressure imprint resistance and adhesiveness of optical discs A through E obtained in Examples 1 through 5 is excellent.

INDUSTRIAL APPLICABILITY

An optical disc with a uniform thickness of the adhesive layer and excellent pressure imprint resistance is obtained by the present invention. The present invention is suitable for Blu-ray Discs and particular Blu-ray Discs which has been bare discs.

**Claims**

1. An optical disc manufacturing sheet for adhering a protective layer to the recording layer of an optical disc, the optical disc manufacturing sheet comprising a curable adhesive layer, the pre-curing storage elastic modulus of which is $10^3$ to $10^6$ Pa, and the post-curing storage elastic modulus of which is $10^7$ to $10^{11}$ Pa.

**2.** An optical disc manufacturing sheet according to Claim 1, wherein said adhesive layer contains an energy rays-curable polymer material as a principal component.

**3.** An optical disc manufacturing sheet according to Claim 2, wherein said energy rays-curable polymer material is an acrylic ester copolymer having energy rays-curable groups in the side chains thereof.

**4.** An optical disc manufacturing sheet according to Claim 3, wherein the mean side-chain introduction rate of said energy rays-curable groups is 0.1 to 30 mol%.

**5.** An optical disc manufacturing sheet according to Claim 3 or 4, wherein said energy rays-curable groups are unsaturated groups, and wherein the weight-average molecular weight of said acrylic ester copolymer is 100,000 or more.

**6.** An optical disc manufacturing sheet according to Claim 2, wherein said energy rays-curable polymer material is a mixture of an acrylic ester copolymer having energy rays-curable groups in the side chains thereof and an energy rays-curable multifunctional monomer and/or oligomer.

**7.** An optical disc manufacturing sheet according to Claim 2, wherein said energy rays-curable polymer material is a mixture of an acrylic ester copolymer having no energy rays-curable groups and an energy rays-curable multifunctional monomer and/or oligomer.

**8.** An optical disc manufacturing sheet according to any of Claims 1 through 7, comprising said adhesive layer and a protective layer.

**9.** An optical disc manufactured using an optical disc manufacturing sheet according to any of Claims 1 through 8, wherein said protective layer is adhered by means of said adhesive layer which has been cured.

Fig. 1

# Fig. 2

(a)

(b)

(c)

(d)

D1

Fig. 3

(a)

(b)

(c)

(d)

(e)

(f)

Fig. 4

Fig. 5

(a)

(b)

(c)

(d)

(e)

D1′

<div align="center">

**INTERNATIONAL SEARCH REPORT**

</div>

| | International application No. |
|---|---|
| | PCT/JP2004/005486 |

| A. CLASSIFICATION OF SUBJECT MATTER |
|---|
| Int.Cl$^7$ G11B7/26 |
| |
| According to International Patent Classification (IPC) or to both national classification and IPC |

| B. FIELDS SEARCHED |
|---|
| Minimum documentation searched (classification system followed by classification symbols) |
| Int.Cl$^7$ G11B7/26 |
| |

Documentation searched other than minimum documentation to the extent that such documents are included in the fields searched

| Jitsuyo Shinan Koho | 1922–1996 | Toroku Jitsuyo Shinan Koho | 1994–2004 |
|---|---|---|---|
| Kokai Jitsuyo Shinan Koho | 1971–2004 | Jitsuyo Shinan Toroku Koho | 1996–2004 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| X | EP 1302941 A2 (LINTEC Corp.),<br>16 April, 2003 (16.04.03),<br>Full text; all drawings<br>& JP 2003-123332 A | 1–9 |
| Y | JP 3338660 B (Sony Corp.),<br>09 August, 2002 (09.08.02),<br>Full text; all drawings<br>& US 6440516 B1 | 1–9 |
| Y | JP 2000-67468 A (Teijin Ltd.),<br>03 March, 2000 (03.03.00),<br>Full text; all drawings<br>(Family: none) | 1–9 |

| ☒ Further documents are listed in the continuation of Box C. | ☐ See patent family annex. |
|---|---|

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 03 June, 2004 (03.06.04) | 22 June, 2004 (22.06.04) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

| International application No. |
| --- |
| PCT/JP2004/005486 |

**C (Continuation). DOCUMENTS CONSIDERED TO BE RELEVANT**

| Category* | Citation of document, with indication, where appropriate, of the relevant passages | Relevant to claim No. |
| --- | --- | --- |
| P,A | JP 2003-263802 A (Lintec Corp.), 19 September, 2003 (19.09.03), Full text; all drawings (Family: none) | 1-9 |
| P,A | JP 2003-272260 A (Lintec Corp.), 26 September, 2003 (26.09.03), Full text; all drawings (Family: none) | 1-9 |

Form PCT/ISA/210 (continuation of second sheet) (January 2004)